## Europäisches Patentamt

(19) **European Patent Office**

**Office européen des brevets**

(11) Publication number: **0 205 744**
**A2**

(12) # EUROPEAN PATENT APPLICATION

(21) Application number: **86102248.1**

(22) Date of filing: **20.02.86**

(51) Int. Cl.⁴: **B 01 F 17/00**

(30) Priority: **22.02.85 US 704451**

(43) Date of publication of application: **30.12.86**
**Bulletin 86/52**

(84) Designated Contracting States: **AT BE CH DE FR GB IT LI NL SE**

(71) Applicant: **HENKEL CORPORATION, 7900 West 78th Street, Minneapolis Minnesota 55435 (US)**

(72) Inventor: **Howland, Warren W., 12111 N. Mississippi Drive, Champlin, Min. 55316 (US)**

(74) Representative: **von Kreisler, Alek, Dipl.-Chem et al, Patentanwälte Dr.-Ing. Schönwald Dr.-Ing. Eishold; Dr. Fues Dipl.-Chem. von Kreisler; Dipl.Chem. Keller Dipl.-Ing. Selting; Dr. Werner Deichmannhaus am Hauptbahnhof, D-5000 Köln 1 (DE)**

(54) **Energy efficient high solids slurry stabilizers.**

(57) High solids slurry stabilizers are provided which are comprised of an acid-sensitive crosslinked polysaccharide and a water-soluble polymer having repeating units derived from an acrylamidoalkanesulfonic acid or the ammonium salt thereof, e.g. a homopolymer of 2-acrylamido-2-methyl-propanesulfonic acid. The stabilizer compositions are effective in providing homogeneous stabilized aqueous slurries of finely divided solids, e.g. zircon flour, without the need for high energy mixing. The invention also provides methods for varying high solid slurries using such stabilizer compositions and high solid slurries comprised of such stabilizer compositions. The invention also provides for high solids slurries comprised of a water-soluble polymer having repeating units derived from the ammonium salt of an acrylamidoalkanesulfonic acid as the sole stabilizer and to methods of preparing such slurries.

ACTORUM AG

PATENT
Case 4377

## ENERGY EFFICIENT HIGH SOLIDS SLURRY STABILIZERS

### FIELD OF THE INVENTION

This invention relates to stabilizers useful in stabilizing high solid slurries against particle settling and bed compaction. More particularly, this invention relates to a mixture comprised of a poly(acrylamidoalkanesulfonic acid) or the ammonium salt thereof and an acid-sensitive cross-linked polysaccharide, to a method of stabilizing a high solids slurry with such a mixture, and to high solid slurries comprised of such mixtures. This invention also relates to a high solids slurry containing the ammonium salt of a poly(acrylamido alkanesulfonic acid) as the sole stabilizer.

### BACKGROUND OF THE INVENTION

The use of acid-sensitive crosslinked polysaccharides to thicken aqueous compositions is known in the art. For example, U.S. Patent No. 3,163,219 discloses that aqueous gels can be prepared from guar gum (a polygalactomannan), boric acid and sodium carbonate. The sodium carbonate renders the aqueous solution alkaline to provide borate ions in solution which crosslink the cis hydroxyl units of the guar gum polygalactomannans. Similarly, U.S. Patent 3,202,556 discloses aqueous gels prepared from a galactomannan gum and a crosslinking agent selected from the group consisting of compounds of the metals antimony and bismuth soluble in the system, and a base wherein gelation occurs at a pH of from 6 to 13, and preferably 7 to 11.

U.S. Patent No. 2,644,763 discloses that a mixture of locust bean gum, a sodium borate and an aldehyde selected from the group consisting of glyoxal and pyruvic aldehyde or an acid-reacting compound selected from the group consisting of ammonium chloride, citric acid, boric acid

-1-

and aluminum sulfate is dispersible without difficulty in cold water, i.e. the mixture need not be added slowly as is necessary with straight locust bean gum, but can be dumped directly into cold water without increasing its liability to form lumps.

U.S. Patent No. 2,868,664 discloses that lump-free aqueous solutions of galactomannan can be prepared from compositions comprised of a galactomannan gum, a hydrophobic or gum dispersing agent, such as an alkali metal borate, and a neutralizing agent comprised of an acid material, such as water soluble acid salt, e.g. monosodium phosphate, which has been pretreated with a material, such as a polyethylene glycol having molecular weight of above about 2000, that will delay the dissolution of the acid material in the aqueous solution.

## SUMMARY OF THE INVENTION

This invention relates to a composition useful as a high solids slurry stabilizer which is comprised of an acid-sensitive crosslinked polysaccharide and a water-soluble polymer comprised of repeating units derived from an acrylamidoalkanesulfonic acid or the ammonium salt thereof, wherein the weight ratio of acid-sensitive crosslinked polysaccharide to water-soluble polymer ranges from about 10:1 to about 1:10.

This invention also relates to a method of stabilizing the high solids slurry comprised of adding the composition described above to high solids slurry and mixing to obtain a homogeneous mixture. This invention also relates to the high solids slurry comprised of a finely divided solid material, water, and the stabilizer described above.

In addition, this invention relates to a method of stabilizing a high solids slurry comprised of adding the ammonium salt of a poly(acrylamidoalkanesulfonic acid) to a high solids slurry and mixing to obtain a homogeneous mixture. This invention also relates to a high solids slurry comprised of a finely divided solid material having a low surface charge density, water, and the ammonium salt stabilizer described above.

One of the important advantages of the use of the stabilizer of this invention is the energy efficiency resulting from the use of a stabilizer of this invention. When preparing high solid slurries of inorganic powders, a condition is reached during the addition of a crosslinked polysaccharide stabilizer where the slurry becomes extremely thick and difficult to mix. High energy mixing is required at this point in order to obtain a smooth homogeneous slurry and to complete the addition of the stabilizer, or, if the stabilizer is dry blended with the solid, to complete the addition of the blended solids to the slurry. It has been found that poly(acrylamidoalkanesulfonic acid) or the ammonium salt thereof liberates hydronium ions in solution at a rate slow enough to limit the hydration of the crosslinked polysaccharide and allow for low energy mixing to obtain a homogeneous slurry having excellent stability.

## DETAILED DESCRIPTION OF THE INVENTION

The two essential components of the dual stabilizer compositions of this invention are an acid-sensitive crosslinked polysaccharide and a water-soluble polymer comprised of repeating units derived from an acrylamidoalkanesulfonic acid or the ammonium salt thereof.

The water-soluble polymers are synthetic polymers comprised of repeating units derived from an acrylamidoalkanesulfonic acid or the ammonium salt thereof and, optionally, units derived from other monomers that will not adversly affect the water solubility and acidity of the polymer in the stabilizer compositions of this invention. Examples of suitable other ethylenically unsaturated comonomers include acrylamide and acrylic acid. In general, the water-soluble polymer should consist of at least about 10% by weight, more preferably at least about 20% by weight, and most preferably at least about 50% by weight of units derived from an acrylamidoalkanesulfonic acid or the ammonium salt thereof.

The water-soluble polymers useful in the stabilizer composition of this invention will generally have a molecular weight of from about 50,000 to about 5,000,000, more preferably between about 1,000,000 and about 3,000,000. They are generally prepared by aqueous solution polymerization techniques using redox catalysts.

A particularly preferred synthetic acidic polymer is a homopolymer of 2-acrylamido-2-methylpropanesulfonic acid available from Henkel Corporation as Rheothik™ 80-11. These homopolymers may be prepared as

-3-

disclosed in U.S. Patent No. 3,931,089 to Karl incorporated herein by reference. Also preferred is a homopolymer of the ammonium salt of 2-acrylamido-2-methylpropanesulfonic acid. This homopolymer is generally prepared by polymerizing the ammonium salt of 2-acrylamido-2-methylpropanesulfonic acid by the techniques disclosed in U.S. Patent No. 3,931,089.

The other essential component of the stabilizer compositions of this invention is a polysaccharide that has been crosslinked by an acid-sensitive crosslinking agent. The polysaccharides useful in the stabilizer composition of the invention are those of sufficient molecular weight to stabilize a high solids slurry and which are capable of being crosslinked by acid-sensitive crosslinking agents. Particularly preferred polysaccharides are the polygalactomannans found in natural gums such as guar gum and locust bean gum. Prior to their use in the stabilizer compositions of this invention, the polysaccharides are treated with a crosslinking agent to enhance the dispersibility of the polysaccharide.

The crosslinking agents useful in the present invention are those which reversibly crosslink the polysaccharide under alkaline conditions, i.e. those which form crosslinks in an alkaline medium, but which will uncrosslink when the medium is made acidic. Examples of suitable crosslinking agents are polyvalent metals such as antimony and bismuth and borate salts such as sodium tetraborate (borax) and sodium metaborate. The preferred crosslinking agent is borax. The amount of crosslinking agent used will generally vary from about 0.001% to about 0.1% by weight of the polysaccharide to be crosslinked, more preferably about .017% to about 0.24% and most preferably about 0.02%.

The preferred acid-sensitive crosslinked polysaccharides are borated galactomannans. Particularly preferred borated galactomannans are borated guar gums available from the Henkel Corporation as Galaxy® 1084 and Galaxy® 211S.

The stabilizer compositions of this invention may also contain a second polysaccharide thickener in addition to the acid-sensitive crosslinked polysaccharide. Examples of these other polysaccharide thickeners are guar gum, locust bean gum, alkylated galactomannans, hydroxyalkylated galactomannans, carboxyalkylated galactomannans, alkylcelluloses, hydroxyalkylcelluloses, and the corresponding mixtures thereof.  A particularly preferred second polysaccharide thickener is xanthan gum.

The relative proportions of the synthetic acidic polymer and the acid-sensitive crosslinked polysaccharide in the dual stabilizer mixtures are not critical and may vary from 10:1 to about 1:10 parts by weight, preferably from about 5:1 to about 1:5, more preferably from about 2:1 to about 1:2, with a 1:1 mixture being most preferred.  A preferred two component stabilizer composition of this invention is a blend of a homopolymer of 2-acrylamido-2-methylpropanesulfonic acid, available from Henkel Corporation as Rheothik™ 80-11A and a high viscosity borated guar gum available from Henkel Corporation as Galaxy® 1084 in a 1:1 weight ratio.  A preferred three component stabilizer composition of this invention is a mixture of 50% Rheothik™ 80-11A, 46% Galaxy® 1084, and 4% xanthan gum, all percentages by weight.

The high solids slurries that may be stabilized by the use of the dual stabilizers of this invention are comprised of a major amount of a finely divided inorganic solid and a minor amount of water.  Examples of suitable finely divided inorganic solids include the oxides of transition metals such as zirconium and titanium, kaolin clay, and powdered graphite.  A particularly preferred finely divided inorganic solid is zircon flour which is finely divided sand containing considerable amounts of zirconium, titanium, and related metals.

It has been found that the ammonium salt of poly(acrylamidoalkanesulfonic acid) is useful when used alone as the sole stabilizer for a finely divided inorganic solid that has a low surface charge density.  In contrast, it has been found that when a homopolymer of 2-acrylamido-2-methylpropanesulfonic acid was used alone as the sole stabilizer for a finely divided inorganic solid such as zircon flour, the particles in the slurry settled much more rapidly than the slurries of this invention and formed a very hard compacted bed which was very difficult to reslurry.  Similarly, when the ammonium salt of a homopolymer of 2-acrlyamido-2-methylpropanesulfonic acid was used alone as the sole stabilizer for finely divided inorganic solid having a high surface charge density such as kaolin clay, it was found that although the rate of particle settling of the slurry was satisfactory, the bed

-5-

formed by the slurry was very hard and compacted and therefore very difficult to reslurry. Accordingly, the ammonium salt of a poly(acrylamido-amidoalkanesulfonic acid)should be used alone as the sole stabilizer only with materials that inherently have a low surface charge density such as zircon flour and powdered graphite or with high surface charge density materials that have been treated to lower the surface charge density such as kaolin clay which has been treated with an alkali material to neutralize the positive surface charge.

The high solids slurries containing the stabilizers of this invention may be prepared in a variety of ways. For example, a stabilizer of this invention can simply be added to a slurry comprised of a major amount of a finely divided inorganic solid and a minor amount of water. Alternatively, the stabilizer can be dry blended with the finely divided inorganic solid and the resulting blend added to a minor amount of an aqueous composition to form the stabilized high solids slurry.

The high solids slurries of the present invention have many uses. For example, high solids slurries wherein the finely divided inorganic solid is a heat resistant material, such as zircon flour, are useful in preparing refractory articles, such as molds used in the casting of alloys. For example, slurry can be mixed with a binder, e.g. a cross-linked polyacrylic acid resin, sprayed or brushed onto a sand mold and then dried.

## EXAMPLES

The following examples illustrate a control example with no stabilizer, comparative examples, and examples of this invention.

### CONTROL EXAMPLE

A control example for the following examples was prepared as follows. Deionized water in an amount of 100 g. was placed in a one pint blender cup. Zircon flour in an amount of 400 g. was added to the blender cup with mixing. The mixture was easy to mix and pour, but settled very quickly. After one month, this sample exhibited a settled bed about 9.5 mm thick which was very hard, i.e. brick-like, and was very difficult to reslurry.

EXAMPLE 1

In this comparative example, 3.68 g. of borated galactomannan (Galaxy® 1084) and 0.32 g. xanthan gum (Kelzan D) were premixed to prepare 4 g. of stabilizer composition. This comparative stabilizer was then dry mixed with 396 g. of zircon flour. Deionized water, in an amount of 100 g., was then placed in a one pint blender cup. The dry premix was added to the water with mixing. This mixture went through a very thick stage while mixing before thinning on shear. It was mixed about 2 minutes, covered and allowed to stand. After one month, the sample displayed a settled bed of only about 2 mm which was reslurried easily upon simple mixing.

EXAMPLE 2

In this comparative example 3.68 g. of borated galactomannan (Galaxy® 1084) was dry mixed with .32 g. of dry ground poly(2-acrylamido-2-methylpropanesulfonic acid) (Rheothik™ 80-11). This dry mix was then mixed with 396 g. of zircon flour. Deionized water, in an amount of 100 g. was placed in one pint blender cup. The dry premix was then added to the water with mixing. This mixture also went through a very thick stage before thinning on shear. It was mixed about 2 minutes, covered and allowed to stand. After one month, the sample exhibited a settled bed about 2 mm thick which reslurried quite easily upon simple mixing.

EXAMPLE 3

A stabilizer composed of 1.84 g. of borated galactomannan (Galaxy® 1084), 0.16 g. of xanthan gum (Kelzan D) and 2.00 g. of poly(2-acrylamido-2-methylpropanesulfonic acid) (Rheothik™ 80-11) was prepared. This stabilizer was then mixed with 396 g. of dry zircon flour. Deionized water in an amount of 100 g. was then placed in a one pint blender. The dry premix was then added to the water with mixing. This mixture did not go through the very thick stage noted in Examples 1 and 2. The mixture was mixed for about 2 minutes, covered and allowed to stand. After about 1 month at room temperature, the sample exhibited a settled bed of about 5 mm thick. A hard crust had formed on the bed surface. The material under the crust reslurried upon simple mixing.

EXAMPLE 4

A stabilizer composed of 2.0 g. of borated galactomannan (Galaxy® 1084) and 2.0 g. dry ground poly(2-acrylamido-2-methylpropanesulfonic acid) (Rheothik™ 80-11) was prepared. The stabilizer mixture was then dry mixed with 396 g. of dry zircon flour. Deionized water in an amount 100 g. was then placed in a one pint blender cup. The dry premix was then added to the water with mixing. This mix did not go through the very thick stage noted in Examples 1 and 2. This mixture was mixed for about 2 minutes, covered and allowed to stand. After about 1 month, this sample exhibited a settled bed about 4 mm thick. The bed exhibited a hard crust on the surface. The mix underneath the crust was reslurried upon simple mixing.

EXAMPLE 5

A stabilizer composed of 4 g. of dry ground poly(2-acrylamido-2-methylpropanesulfonic acid) was dry mixed with 396 g. of dry zircon flour. Deionized water in an amount of 100 g. was placed in a one pint blender cup. The dry premix was then added to the water with mixing. This mix did not go through the very thick stages noted in Examples 1 and 2. This mixture was mixed for about 2 minutes, covered and allowed to stand. After about one month, this sample exhibited a three layered settled bed about 11 mm thick that was harder and more difficult to reslurry than the settled bed of the control example above.

EXAMPLE 6

A stabilizer composed of 8 g. of dry ground poly(ammonium 2-acrylamido-2-metylpropanesulfonate) was mixed with dry zircon flour. Deionized water in an amount of 100 g. was then placed in a one pint blender cup. The dry premix was then added to the water with mixing. This mixture did not go through the very thick stages noted in Examples 1 and 2 above. The mixture was mixed about 2 minutes, covered and allowed to stand. After about one month, this sample exhibited a settled bed only about 3 mm thick which reslurried easily on simple mixing.

EXAMPLE 7

A stabilizer composed of 2 g. of borated galactomannan (Galaxy® 1084) and 2 g. of dry ground poly(ammonium 2-acrylamido-2-methylpropanesulfonate) was prepared. This stabilizer was then dry mixed with 396 g. of dry zircon flour. Deionized water in an amount of 100 g. was then added to a one pint blender cup with the dry mix that was added to the water with mixing. This mixture did not go through the very thick stages noted in Examples 1 and 2 above. The mixture was mixed about 2 minutes, covered and allowed to stand. After one month, this sample exhibited a settled bed of only about 2.5 mm thick which was reslurried very easily upon simple mixing.

WHAT IS CLAIMED IS:

1. A composition useful as a high solids slurry stabilizer comprising an acid-sensitive crosslinked polysaccharide and a water-soluble polymer comprised of repeating units derived from an acrylamidoalkanesulfonic acid or the ammonium salt thereof, wherein the weight ratio of acid-sensitive crosslinked polysaccharide to water-soluble polymer ranges from about 10:1 to about 1:10.

2. A stabilizer composition in accordance with claim 1 wherein the weight ratio of the acid-sensitive crosslinked polysaccharide to the water-soluble polymer ranges from about 5:1 to about 1:5.

3. A stabilizer composition in accordance with claim 1 wherein the weight ratio of the acid-sensitive crosslinked polysaccharide to the water-soluble polymer ranges from about 2:1 to about 1:2.

4. A stabilizer composition in accordance with claim 1 wherein the weight ratio of the acid-sensitive crosslinked polysaccharide to the water-soluble polymer is about 1:1.

5. A stabilizer composition in accordance with claim 1 wherein the water-soluble polymer is a homopolymer of 2-acrylamido-2-methylpropanesulfonic acid.

6. A stabilizer composition in accordance with claim 1 wherein the acid-sensitive crosslinked polysaccharide is a borated galactomannan.

7. A stabilizer composition in accordance with claim 6 wherein the borated galactomannan is borated guar.

8. A stabilizer composition in accordance with claim 1 further comprised of a second polysaccharide.

-10-

9. A stabilizer composition in accordance with claim 8 wherein the second polysaccharide is xanthan gum.

10. A stabilizer composition in accordance with claim 9 wherein the xanthan gum is present in an amount less than about 10% by weight of the stabilizer composition.

11. A high solids slurry composition comprising a major amount of a finely divided inorganic solid, a minor amount of water, and a stabilizing amount of the stabilizer composition of claim 1.

12. A high solids slurry composition in accordance with claim 11 wherein the finely divided inorganic solid is zircon flour.

13. A method of stabilizing a high solids aqueous slurry comprising adding a stabilizing amount of a stabilizer composition in accordance with claim 1 to a high solids aqueous slurry and mixing the slurry to form a homogenous composition.

14. A method of preparing a high solids aqueous slurry comprising blending a finely divided inorganic solid with a stabilizing amount of a stabilizer composition in accordance with claim 1, adding the resulting blend to an aqueous composition, and then mixing the resulting mixture to form a homogenous composition.

15. A high solids slurry composition comprising a major amount of a finely divided inorganic solid having a low surface charge density, a minor amount of water, and a stabilizing amount of a water-soluble polymer comprised of repeating units derived from the ammonium salt of an acrylamidoalkanesulfonic acid.

16. A high solids slurry composition in accordance with claim 15 wherein the water-soluble polymer is a homopolymer of ammonium 2-acrylamido-2-methylpropanesulfonate.

17. A method of stabilizing a high solids aqueous slurry comprising adding a stabilizing amount of a water soluble polymer comprised of repeating units derived from the ammonium salt of an acrylamidoalkanesulfonic acid, to a high solids aqueous slurry wherein the finely divided inorganic solid has a low surface charge density, and mixing the slurry to form a homogeneous composition.

18. A method of preparing a high solids aqueous slurry comprising blending a finely divided inorganic solid having a low surface charge density with a stabilizing amount of a water-soluble polymer comprised of repeating units derived from the ammonium salt of an acrylamidoalkanesulfonic acid, adding the resulting dry blend to an aqueous composition and then mixing the resulting mixture to form a homogenous composition.